# EUROPÄISCHE PATENTANMELDUNG

(11) **EP 1 273 890 A1**
(43) Veröffentlichungstag der Anmeldung: **08.01.2003**
(21) Anmeldenummer: 01116427.4
(22) Anmeldetag: 06.07.2001
(51) Int. Cl.: G01D 21/02, G01D 7/02

(54) **Feldgerät mit einer Anzeigevorrichtung**

(71) Anmelder: Endress + Hauser Wetzer GmbH + Co. KG, D-87484 Nesselwang (DE)
(72) Erfinder: Konrad, Michael, 87437 Kempten (DE); Schmidt, Dieter, 87484 Nesselwang (DE)
(74) Vertreter: Andres, Angelika

(57) **Zusammenfassung**

Die Anzeigevorrichtung (AV) dient zur Vor-Ort-Visualisierung von Betriebszuständen eines automatisierten Prozesses (PZ). Dazu umfaßt sie eine Anzeigesteuereinrichtung (AS), die zumindest zeitweise ein Zustandsanzeigesignal (ZA) liefert, das eine Konstellation von Signalzuständen wenigstens zweier Prozeßsignale (PD₁, PD₂). Zumindest eines der beiden Prozeßdatensignale (PD₁, PD₂) ist von einem extern des Feldgeräts (F₁) erzeugten Fremdsignal (RX) abgeleitet. Das Feldgerät (F₁) weist ferner ein Anzeigeelement (AE) auf, das auf eine Änderung des Zustandsanzeigesignals (ZA) mit einer signifikanten Änderung seines Erscheinungsbilds so reagiert, daß es die Konstellation der Signalzustände beider Prozeßdatensignale (PD₁, PD₂) visuell wahrnehmbar signalisiert. Das Feldgerät (F₁) ist daher besonders für eine seitens eines Bedienpersonals vor Ort durchzuführende operative Überwachung ganzer Anlagen oder Anlagenbereiche geeignet.

## Beschreibung

Die Erfindung betrifft ein Feldgerät mit einer Anzeigevorrichtung zur Vor-Ort-Visualisierung von Betriebszuständen eines automatisierten Prozesses.

Die Führung und Überwachung automatisierter Prozesse, z.B. in der chemischen, pharmazeutischen, verfahrenstechnischen Industrie etc., erfolgt in immer größerem Maße von übergeordneten Prozeßleitwarten aus, an die zu diesem Zweck große Mengen von "im Feld", also innerhalb der entsprechenden verfahrenstechnischen Anlage erzeugter Prozeßdaten, z.B. via Feldbus, übertragen werden.

Zum Erzeugen solcher Prozeßdaten wird üblicherweise eine Vielzahl von am Prozeß oder in dessen unmittelbarer Nähe installierter Feldgeräte, wie z.B. Meßgeräte, Steuergeräte und/oder Datenspeichergeräte, verwendet, die entsprechenden Meß- und/oder Stellwerte inform von standardisierten Analog- oder Digitalsignalen liefern können.

Trotz einer heutzutage im wesentlichen rechnerbasierten, insb. feldfern durchgeführten, Auswertung von Prozeßdaten, ist oftmals jedoch nach wie vor eine operative Überwachung vor Ort, also eine Überwachung durch entsprechendes in der Anlage agierendes Bedienpersonal erforderlich, zumeist auch vorgeschrieben. Daher werden auch künftig, insb. auch in vollautomatisierten, Anlagen solche im Feld erzeugten Prozeßdaten nicht nur in den Prozeßleitwarten sondern auch nach wie vor parallel dazu direkt an den Feldgeräten visualisiert, die diese Prozeßdaten liefern.

Zur Vor-Ort-Visualisierung einzelner Prozeßdaten haben sich verschiedene Typen von Anzeigeelementen, wie z.B. Balkenanzeigen oder Digitalanzeigen, insb. LCD-Displays, bewährt. Des weiteren sind auch solche Anzeigelemete von der Art, wie sie aus Zeigerinstrumenten bekannt sind, immer noch weit verbreitet. Neben der Vor-Ort-Visualisierung des eigentlichen Meßwerts ist bei marktüblichen Feldgeräten oftmals auch eine Vor-Ort-Visualisierung einzelner ausgewählter Feldgerätedaten, wie z.B. momentane Gerätekonfigurationen repräsentierende Parameter oder Gerätefehlermeldungen, vorgesehen.

Problematisch für eine solche operative Überwachung vor Ort ist aber die Tatsache, daß in den immer komplexer werdenden Anlagen einerseits die für die Beschreibung zu überwachender Betriebszustände erforderlichen Prozeßdaten immer umfangreicher werden. Andererseits aber ist vom Bedienpersonal vor Ort eine entsprechende Interpretation der Prozeßdaten im Sinne einer Zuordnung zu einem der zu überwachenden Betriebszustände "händisch" nur für Prozeßdaten-Ensembles von geringer Mächtigkeit praktisch durchführbar.

Abgesehen davon, daß solche Prozeßdaten-Ensembles häufig viel zu umfangreich für eine allumfassende operative Überwachung vor Ort sind, ist ofmals ein schnelles, insb. gleichzeitiges, visuelles Erfassen der relevanten Prozeßdaten seitens des Bedienpersonals oftmals überhaupt nicht möglich, da die entsprechenden Feldgeräte und somit auch deren Anzeigeelemente zumeist weit voneinander entfernt angeordnet und somit gleichzeitig nicht einsehbar sind.

Vor diesem Hintergrund, daß einerseits Prozeßdaten eines automatisierten Prozesses auch vor Ort immer mehr dazu dienen, Anlagen oder Anlagenbereiche möglichst ganzheitlich zu überwachen, andererseits aber ein gleichzeitiges Erfassen und Interpretieren sämtlicher den jeweiligen Betriebszustand der Anlage repräsentierender Prozeßdaten vor Ort bislang nur sehr bedingt möglich ist, haben sich die Erfinder die Aufgabe gestellt, ein Feldgerät mit einer Anzeigevorrichtung zu schaffen, mittels der solche Betriebszustände für vor Ort agierendes Bedienpersonal visuell leicht erfaßbar signalisiert und somit automatisierte Prozesse einer operativen Überwachung vor Ort leichter zugänglich gemacht werden können.

Zur Lösung der Aufgabe besteht die Erfindung in einem Feldgerät mit einer Anzeigevorrichtung zur Vor-Ort-Visualisierung von Betriebszuständen eines automatisierten Prozesses, welche Anzeigevorrichtung umfaßt:
- eine Anzeigesteuereinrichtung
   -- die wenigstens ein erstes Prozeßdatensignal und ein zweites Prozeßdatensignal empfängt und
   -- die zumindest zeitweise ein Zustandsanzeigesignal liefert, das eine Konstellation von Signalzuständen wenigstens der beiden Prozeßsignale repräsentiert,
- wobei zumindest das erste Prozeßdatensignal von einem extern des Feldgeräts erzeugten Fremdsignal abgeleitet ist, und
- ein Anzeigeelement von veränderbarem Erscheinungsbild,
   -- wobei das Anzeigeelement über sein Erscheinungsbild eine Konstellation der Signalzustände beider Prozeßdatensignale visuell wahrnehmbar signalisiert und
   -- wobei das Anzeigeelement auf eine Änderung des Zustandsanzeigesignals mit einer signifikanten Veränderung seines Erscheinungsbilds reagiert.

Nach einer bevorzugten ersten Weiterbildung der Erfindung liefert die Anzeigesteuereinrichtung, zumindest zeitweise ein Wertanzeigesignal, das einen Signalwert eines der beiden Prozeßdatensignale momentan repräsentiert und reagiert das Anzeigeelement dadurch auf das Wertanzeigesignal, daß es zumindest zeitweise diesen Signalwert visuell wahrnehmbar präsentiert.

Nach einer bevorzugten ersten Ausgestaltung der Erfindung ist eines der beiden Prozeßdatensignale von einem intern im Feldgerät erzeugten Meßwandlersignal abgeleitet.

Nach einer bevorzugten zweiten Weiterbildung der Erfindung umfaßt das Anzeigeelement ein Leuchtmittel von einstellbarer Lichtfarbe zum Ausleuchten eines Anzeigehintergrundes und reagiert das Anzeigeelement dadurch auf das Zustandsanzeigesignal, daß das Leuchtmittel den Anzeigehintergrund in einer Lichtfarbe ausleuchtet, die den durch das Zustandsanzeigesignal momentan repräsentierten Betriebszustand signalisiert.

Nach einer bevorzugten zweiten Ausgestaltung der Erfindung leuchtet das Leuchtmittel den Anzeigehintergrund mit einer Lichtfarbe aus, die mittels des Zustandsanzeigesignals aus einem Vorrat diskreter Farbwerte ausgewählt worden ist.

Nach einer bevorzugten dritten Weiterbildung der Erfindung wird das Fremdsignal dem Feldgerät über eine Kommunikations-Schnittstelle zugeführt.

Ein Grundgedanke der Erfindung besteht darin, neben oder ggf. anstelle einer herkömmlichen Vort-Ort-Anzeige von einzelnen Prozeßdaten, insb. Meß- oder Stellwerten, Konstellationen von Signalzuständen zweier oder mehrerer Prozeßdatensignale und somit einzelne, eine Vielzahl vorherdefinierte Betriebszustände, eingeschlossen Fehleroder Alarmzuständen, des zu überwachenden Prozesses vor Ort visuell wahrnehmbar zu signalisieren.

Die Erfindung beruht dabei insb. auf der Erkenntnis, daß es aufgrund immer komplexer werdender Prozeßstrukturen und - abläufe einhergehend mit einer überwiegend automatisierten, insb, auch "feldfern", durchgeführten Auswertung bei durch Bedienpersonal vor Ort durchzuführenden Kontrollen immer weniger um das Erfüllen von Regelungs- und/oder Steuerungsaufgaben im Sinne einer Führung der Anlage in einem optimalen Arbeitszustand gehen wird. Vielmehr werden solche Kontrollen künftig mehr und mehr durchgeführt, um die Anlage auch vor Ort ganzheitlich zu überwachen und so allfällige kritische oder gefährliche Betriebzustände in einzelnen Anlagenbereiche möglichst rechtzeitig zu erkennen. Dies würde dann auch ein schnelles Einleiten von entsprechenden Gegenmaßnahmen, insb. auch ein Eingreifen seitens des vor Ort agierenden Bedienpersonals selbst, ermöglichen.

Durch eine zustandsabhängige farbige Ausleuchtung des jeweiligen Hintergrundes von in solchen Feldgeräten herkömmlich verwendeten Anzeigeelemente können die Betriebszustände für das Bedienpersonal in sehr vorteilhafter Weise augenfällig und auch weithin sichtbar signalisiert werden.

Nachfolgend wird die Erfindung anhand von Ausführungsbeispielen näher erläutert, die in den Figuren der Zeichnung dargestellt sind. Gleiche Elemente sind in den Zeichnungen jeweils mit dem gleichen Bezugszeichen versehen; falls es der Übersichtlichkeit dienlich ist, wird auf die wiederholte Darstellung vorher gezeigter Bezugszeichen in nachfolgenden Figuren verzichtet.
- Fig. 1: zeigt schematisch ein Feldgerät zum Verarbeiten wenigstens zweier Prozeßdatensignale,
- Fig. 2: zeigt schematisch Teilkomponenten des Feldgeräts nach Fig. 1 und
- Fig. 3: zeigt schematisch ein Ausführungsbeispiel für eine Verwendung des Feldgeräts nach Fig. 1.

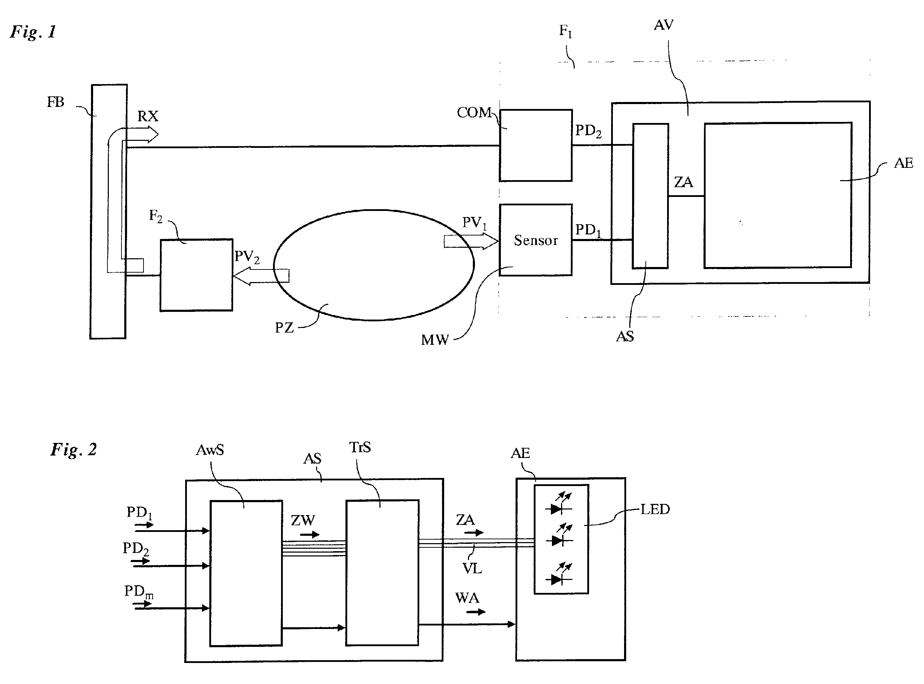

In den Fig. 1 und 2 ist ein erstes Feldgerät F₁ schematisch dargestellt, das erfindungsgemäß dazu dient, vor Ort ausgewählte Betriebszustände eines, insb. automatisierten, Prozesses PZ zu visualisieren. Das Feldgerät F₁ kann, wie in der Fig. 1 angedeutet, ein in einer den Prozeß PZ realisierenden Anlage installiertes, wenigstens eine erste physikalische oder chemische Prozeßvariable PV₁ sensorisch erfassendes Feldmeßgerät, wie z.B. ein Füllstandsmeßgerät, ein Massendurchflußmeßgerät, ein pH-Wertmeßgerät, ein Druckmegerät oder ein Grenzstandsdetektor etc., sein. Feldgerät F₁ kann aber auch ein vor Ort, also in der Anlage, installiertes Datenregistriergerät oder eine in den Prozess PZ aktorisch eingreifende Stellvorrichtung, wie z.B. ein Ventil oder eine Pumpe, sein.

Bevorzugt ist das Felgerät F₁ an einen, insb. seriellen, Feldbus FB angeschlossen, über den es z.B. mit einer feldnahen SPS, mit einer übergeordneten Prozeßleitwarte oder mit anderen Feldgeräten kommuniziert. Daher ist im Feldgerät F₁ eine dem Ankoppeln an den Feldbus FB dienende und in entsprechender Weise an das jeweils verwendete Bus-Übertragungsprotokoll angepaßte Kommunikations-Schnittstelle COM vorgesehen.

Zur Vor-Ort-Visualisierung von Betriebszuständen umfaßt das Feldgerät F₁ eine Anzeigevorrichtung AV mit einem Anzeigeelement AE von veränderbarem optischem Erscheinungsbild und mit einer Anzeigesteuereinrichtung AS für das Anzeigeelement AE.

Die Anzeigesteuereinrichtung AS dient dazu, im Betrieb anhand eines ersten Prozeßdatensignals PD₁ und anhand wenigstens eines zweiten Prozeßdatensignals PD₂ ein, insb. diskretes, das Anzeigeelement AE ansteuerndes und eine Konstellation der Signalzustände beider Prozeßdatensignale PD₁, PD₂ momentan repräsentierendes Zustandsanzeigesignal ZA zu generieren.

Erfindungsgemäß ist zumindest eines der wenigstens zwei Prozeßdatensignale PD₁, PD₂ von einem extern, insb. mittels eines zweiten Feldgeräts F₂, erzeugten Fremdsignal RX abgeleitet. Das Fremdsignal RX kann z.B., wie auch in der Fig. 1 schematisch dargestellt, ein vom zweiten Feldgerät F₂ geliefertes, eine zweite Prozeßvariable PV₂ repräsentierendes Meßsignal sein, das via Feldbus FB zum ersten Feldgerät F₁ hin übertragen wird und dort mittels der erwähnten Kommunikations-Schnittstelle COM in das zu verarbeitende Prozeßdatensignal PD₂ gewandelt wird.

Nach einer bevorzugten Ausgestaltung der Erfindung dient als erstes Prozeßdatensignal PD₁ ein mittels eines Meßwandlers MW des Feldgeräts F₁ erzeugtes, die erste Prozeßvariable PV₁ repräsentierendes Meßwandlersignal. Für den Fall, daß das des Feldgerät F₁ eine Stellvorrichtung ist, kann das Prozeßdatensignal PD₁ aber z.B. auch ein mittels eines Stellwertgebers des Feldgeräts F₁ erzeugtes Stellsignal sein.

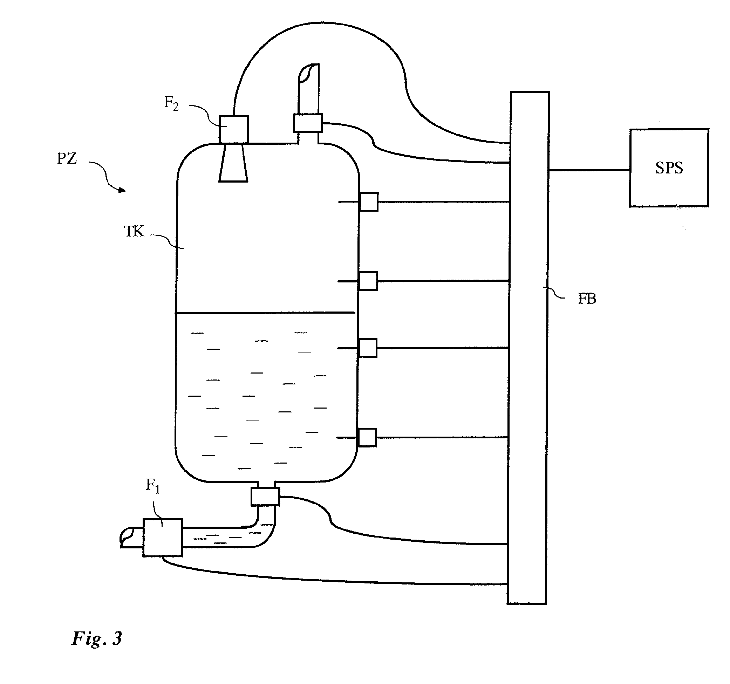

Im in Fig. 3 schematisch dargestellten Ausführungsbeispiel dient als erstes Feldgerät F₁ ein Massedurchflußmeßgerät, das, angeordnet an einer Abflußrohrleitung eines Flüssigkeitstanks TK, einen Massedurchfluß einer hindurchströmenden Flüssigkeit mißt. Ferner dient bei diesem Ausführungsbeispiel ein oberhalb eines maximalen Füllstands im Tank TK montiertes Füllstandsmeßgerät als zweites Feldgerät F₂. Neben dem zweiten Feldgerät F₂ kann das erste Feldgerät F₁, wie in der Fig. 3 schematisch dargestellt, außerdem auch mit einer Vielzahl weiterer Feldgeräte Prozeßdaten austauschen, insb. auch weitere Prozeßdatensignale PDₘ verarbeiten.

Für den dargestellten Anlagenbereich könnte ein optimaler Betriebszustand z.B. dann festgestellt werden, wenn der Tank TK zu 30% bis 80% gefüllt ist und weder Zu- noch Abfluß von Flüssigkeit ermittelt wird. Weitere den optimalen Betriebszustand repräsentierende Konstellationen könnten z.B. auch bei einem gemessenen Abfluß und einem mindestens zu 40% gefülltem Tank TK oder bei auch bei einem gemessenen Zufluß und einem höchstens zu 60% gefülltem Tank TK signalisiert werden. Demgegenüber könnte ein kritische Betriebszustand z.B. bei einem zu über 90% und keinem gemessenen Zufluß oder bei einem zu weniger als 20% gefüllten Tank TK und keinem gemessenen Abfluß definiert sein. Außerdem könnte z.B. auch ein Betriebszustand bei einem zu 80% gefüllten Tank TK und einem gemessenen Zufluß oder bei einem weniger als zu 20% gefüllten Tank TK und einem gemessenen Abfluß ein kritischer Betriebszustand sein. Ein überkritischer oder auch Alarmzustand für den gezeigten Anlagenbereich wäre z.B. bei einem entleerten oder nahezu überfüllten Tank TK zu melden.

Zum Erzeugen des Zustandssignals umfaßt die Anzeigesteuereinrichtung AS eine Auswerte-Stufe AwS. Diese dient dazu, zunächst eine regelbasierte Interpretation einer aktuellen Konstellation von Signalzuständen der zugeführten Prozeßdatensignale PD₁, PD₂, also eine Übersetzung eines Ensembles aktueller Signalwerte der Prozeßdatensignale PD₁, PD₂ in ein den zu signalisierenden Betriebszustand repräsentierendes Zustandswertsignal ZW vorzunehmen. Eine solche Interpretation von Signalzuständen kann z.B. anhand von vorherdefinierten Interpretationsoder auch Übersetzungsregeln erfolgen, die mittels entsprechender Rechenwerke in der Auswerte-Stufe AwS dargestellt sind. Als Rechenwerke können in vorteilhafter Weise z.B. ein Mikrocomputer der Auswerte-Stufe AwS und in diesem abgespeicherte und daselbst ausgeführte Rechenprogramme dienen. Hierbei kann es sich auch als vorteilhaft erweisen, wenn vorgenannte Interpretationsregeln, z.B. von einer übergeordneten Prozeßleitwarte aus via Feldbus FB, an allfällige Veränderungen im Prozeß angepaßt werden können.

Zur Umsetzung des Zustandswertsignal ZW in das Zustandsanzeigesignal ZA ist in der Anzeigesteuereinrichtung AS ferner eine mit der Auswerte-Stufe AwS gekoppelte Treiber-Stufe TrS vorgesehen.

Bevorzugt ist die Treiber-Stufe TrS, wie auch in der Fig. 2 schematisch angedeutet, über ein Ensemble von n Binäreingängen mit entsprechend korrespondierenden parallelen Binärausgängen der Auswerte-Stufe AwS verbunden, die einen dort ermittelten momentanen Signalwert des Zustandswertsignal ZW inform eines einfachen Digitalworts liefern. Eine denkbare Zuordnung für die einzelnen Betriebszustände wäre dann z.B. ein Signalwert von "100" bei detektiertem optimalen Betriebszustand, ein Signalwert von "010" bei detektiertem kritischem Betriebszustand oder ein Signalwert von "001" bei detektiertem überkritischem Betriebszustand.

Abgleitet vom momentanen Signalwert des Zustandswertsignal ZW kann mittels der Treiber-Stufe TrS eine Generierung des Zustandsanzeigesignals ZA z.B. dadurch erfolgen, daß einzelne oder aber auch mehrere paralleler Versorgungsleitungen VL für das Anzeigeelement AE gezielt aktiviert werden und somit dessen Erscheinungsbild in der oben beschriebenen Weise beeinflußt wird. Das so erzeugte Zustandsanzeigesignal ZA entspricht dabei praktisch einem Muster der momentan jeweils aktivierten Versorgungsleitungen VL.

Das Zustandsanzeigesignal ZA und das davon angesteuerte Anzeigeelement AE sind so aufeinander abgestimmt, daß das Anzeigeelement AE auf eine wesentliche, also eine mit einem Wechsel des Prozesses PZ von einem bis dahin gültigen in einen aktuell anderen Betriebszustand korrespondierende Änderung des Zustandsanzeigesignals ZA, in einer vorgebbaren Weise mit einer signifikanten Änderung seines Erscheinungsbilds reagiert.

Als Anzeigeelement AE können z.B. dem Fachmann an und für sich bekannte LC-Displays oder TFT-Displays verwendet werden. Falls erforderlich, kann als Anzeigeelement AE beispielsweise auch ein solches von der Art dienen, wie es von Zeigerinstrumenten her bekannt ist, also mit einer Skala und einem von einem Messwerk angetriebener Zeiger, und wie es z.B. in der EP-A 1 083 410 beschrieben ist.

Nach einer weiteren bevorzugten Ausgestaltung der Erfindung wird die Änderung seines Erscheinungsbilds dadurch realisiert, daß das Anzeigelement AE zumindest segmentweise in einer dem jeweiligen zu signalisierenden Betriebszustand zugeordneten Lichtfarbe von einstellbarem Farbwert aufleuchtet, wobei der jeweilige Farbwert mittels des Zustandsanzeigesignals aus einem Vorrat diskreter Farbwerte ausgewählt wird. Eine denkbare Farbcodierung für die einzelnen Betriebszustände wäre z.B. wenn das Anzeigelements bei detektiertem optimalen Betriebszustand in der Farbe "grün", bei detektiertem kritischem Betriebszustand in der Farbe "gelb" oder bei detektiertem überkritischem Betriebszustand in der Farbe "rot" aufleuchtet.

Anstelle oder parallel zu einer farbcodierten Signalisierung der Betriebszustände kann das Anzeigeelement AE den aktuellen Betriebszustand aber z.B. auch dadurch präsentieren, daß es eine entsprechend zugeordnete Bezeichnung und/oder eine entsprechend zugeordnete Kennzahl inform einer Textmeldung ausgibt.

Zur farbcodierten, insb. auch weithin sichtbaren, Signalisierung des aktuellen Betriebszustandes umfaßt das Anzeigeelement AE nach einer weiteren bevorzugten Weiterbildung der Erfindung ein Leuchtmittel LED von einstellbarer Lichtfarbe. Das Leuchtmittel LED dient bevorzugt dazu, einen Anzeigehintergrund mit eben der Lichtfarbe, insb. vollständig, auszuleuchten, die den durch das Zustandsanzeigesignal ZA momentan repräsentierten Betriebszustand signalisiert. Insbesondere für diesen Fall kann als Anzeigeelement AE in vorteilhafter Weise z.B. ein in STN-(Super Twisted Nematic), in DSTN-(Double Super Twisted Nematic)-Technologie oder in CCSTN-(Color Coded Super Twisted Nematic)-Technolgie realisiertes LC-Display verwendet werden. Der Hintergrund des Anzeigelements AE kann dann im Betrieb z.B. mittels eines als Leuchtmittel LED dienenden Arrays verschiedenfarbiger Leuchtdioden oder mittels als Leuchtmittel LED dienender verschiedenfarbiger Leuchtfolien in der oben beschriebenen Weise ausgeleuchtet sein. Ein weiteres Ausführungsbeispiel für ein geeignetes Anzeigelement AE inform eines LC-Displays ist z.B. auch in der bereits erwähnten EP-A 1 083 410 beschrieben.

Nach einer weiteren bevorzugten Ausgestaltung der Erfindung ist das Anzeigelement AE zumindest zeitweise von einem Wertanzeigesignal WA angesteuert, das einen Signalwert des zweiten Prozeßdatensignals PD₂ momentan repräsentiert. Das Wertanzeigesignal WA wird ebenfalls von der Anzeigesteuereinrichtung AS, insb. auch von deren Treiber-Stufe TrS, geliefert und dient dazu, das Erscheinungsbild des Anzeigeelements AE so zu verändern, daß es den Signalwert visuell erfaßbar präsentiert. Das Darstellen des momentanen Signalwerts des Prozeßdatensignals PD₂ kann z.B. mittels des oben erwähnten LC- bzw. TFT-Displays oder mittels des oben erwähnten, vom zugehörigen Messwerk angetriebene und die Skala überstreichende Zeigers realisiert werden.

Das Erzeugen des Wertanzeigesignal WA und somit auch das Anzeigen des Signalwerts kann z.B. von vor Ort agierendem Bedienpersonal über eine entsprechende Eingabe-Schnittstelle, z.B. eine mit der Anzeigesteuereinrichtung AS, insb. auch mit der Auswerte-Stufe AwS, kommunizierende Eingabetastatur, veranlaßt werden, vgl. hierzu auch die EP-A 1 079 291, in der bereits eine zwar nicht in ein Feldgerät eingebaute jedoch an einen Feldbus angeschlossene Meßwertanzeigeeinheit mit einem Anzeigelement beschrieben ist, die mittels verschiedener Feldgeräte erzeugte, manuell ausgewählte Meßwerte nach einander anzeigen kann.

## Patentansprüche

1. Feldgerät (F₁) mit einer Anzeigevorrichtung (AV) zur Vor-Ort-Visualisierung von Betriebszuständen eines automatisierten Prozesses (PZ), welche Anzeigevorrichtung (AV) umfaßt:
- eine Anzeigesteuereinrichtung (AS)
-- die wenigstens ein erstes Prozeßdatensignal (PD₁) und ein zweites Prozeßdatensignal (PD₂) empfängt und
-- die zumindest zeitweise ein Zustandsanzeigesignal (ZA) liefert, das eine Konstellation von Signalzuständen wenigstens der beiden Prozeßsignale (PD₁, PD₂) repräsentiert,
-- wobei zumindest eines der beiden Prozeßdatensignale (PD₁, PD₂) von einem extern des Feldgeräts (F₁) erzeugten Fremdsignal (RX) abgeleitet ist, und
- ein Anzeigeelement (AE) von veränderbarem Erscheinungsbild,
-- wobei das Anzeigeelement (AE) über sein Erscheinungsbild eine Konstellation der Signalzustände beider Prozeßdatensignale (PD₁, PD₂) visuell wahrnehmbar signalisiert und
-- wobei das Anzeigeelement (AE) auf eine Änderung des Zustandsanzeigesignals (ZA) mit einer signifikanten Veränderung seines Erscheinungsbilds reagiert.

2. Feldgerät (F₁) nach Anspruch 1,
- bei dem die Anzeigesteuereinrichtung (AS), zumindest zeitweise ein Wertanzeigesignal (WA) liefert, das einen Signalwert eines der beiden Prozeßdatensignal (PD₁, PD₂) momentan repräsentiert und
- bei dem das Anzeigeelement (AE) auf das Wertanzeigesignal (WA) dadurch reagiert, daß es zumindest zeitweise diesen Signalwert visuell wahrnehmbar präsentiert.

3. Feldgerät (F₁) nach einem der vorherigen Ansprüche, bei dem eines der beiden Prozeßdatensignal (PD₁, PD₂) von einem intern im Feldgerät (F₁) erzeugten Meßwandlersignal abgeleitet ist.

4. Feldgerät (F₁) nach einem der vorherigen Ansprüche,
- bei dem das Anzeigeelement (AE) ein Leuchtmittel (LED) von einstellbarer Lichtfarbe zum Ausleuchten eines Anzeigehintergrundes umfaßt und
- bei dem das Anzeigeelement auf das Zustandsanzeigesignal (ZA) dadurch reagiert, daß das Leuchtmittel (LED) den Anzeigehintergrund in einer Lichtfarbe ausleuchtet, die den durch das Zustandsanzeigesignal (ZA) momentan repräsentierten Betriebszustand signalisiert.

5. Feldgerät (F₁) nach Anspruch 4, bei dem das Leuchtmittel (LED) den Anzeigehintergrund mit einer Lichtfarbe ausleuchtet, die mittels des Zustandsanzeigesignals (ZA) aus einem Vorrat diskreter Farbwerte ausgewählt worden ist.

6. Feldgerät (F₁) nach einem der vorherigen Ansprüche, bei dem das Fremdsignal (RX) dem Feldgerät (F₁) über eine Kommunikations-Schnittstelle (COM) zugeführt wird.
